# EUROPEAN PATENT SPECIFICATION

(11) **EP 4 298 966 B1**
(45) Date of publication and mention of the grant of the patent: **26.03.2025**
(21) Application number: 23176371.5
(22) Date of filing: 31.05.2023
(51) Int. Cl.: A47J 31/18, A47J 31/40

(54) **A COFFEE MAKER**
KAFFEEMASCHINE
MACHINE À CAFÉ

(30) Priority: 30.06.2022 TR 202210880
(43) Date of publication of application: 03.01.2024
(73) Proprietor: Arçelik Anonim Sirketi, 34445 Istanbul (TR)
(72) Inventor: BERKAN, Cevdet Mumtaz, 34445 Istanbul (TR); EDIS, Kutay, 34445 Istanbul (TR); KAYISDAG, Varol, 34445 Istanbul (TR); GOZEL, Suheyla, 34445 Istanbul (TR); ARIS, Muharrem, 34445 Istanbul (TR)

(56) References cited:
- WO-A1-2017/097651
- CN-A- 102 578 916
- US-A1- 2017 258 262

## Description

The present invention relates to a coffee maker which comprises a detachable transfer channel and which is used especially for preparing Turkish coffee.

In the traditional brewing method of Turkish coffee, the mixture of coffee and water is brewed in the coffee pot until boiling temperature and the brewing process is ended when the rising foam reaches an ideal height. Sugar is also added as per user preference.

In coffee makers, especially in Turkish coffee makers, sugar and coffee are stored in receptacles accessible to the user. The brewing process is performed in a compartment such as coffee pot, container, brewing pot, etc. In these embodiments, coffee and sugar must be automatically transferred to the brewing pot. Various problems may occur during this transfer.

One of the problems is that coffee and sugar residues remain in the existing transfer channel during the transfer of coffee and sugar to the brewing pot. Although the transfer channel is designed as vertically as possible in order to eliminate this problem, residues on the surfaces cannot be prevented.

Moreover, coffee and sugar residues begin to accumulate on the walls of the transfer channel in long-term use. Said residues may cause problems of hygiene, odor, etc. and a narrowing of the cross-sectional area of the transfer channel. Residues accumulating on the walls of the transfer channel over time cause the transfer channel to become clogged or the movable mechanisms used in the transfer channel to fail to work correctly and effectively.

Fully automatic options are very limited in today's Turkish coffee makers. Although there are many options in filter coffee and espresso makers, since the brewing methods thereof are different from Turkish coffee, mixing the coffee with cold water and then brewing the same is not possible these types of coffee makers.

There are two different approaches to dosing coffee and sugar in the state of the art Turkish coffee makers. One of these approaches is to store the coffee above the brewing pot and pour the coffee into the brewing pot with an electromechanical system before the brewing process starts. In this method, the user is given the opportunity to load as much coffee as he/she can brew at one cycle. The user cannot store coffee for future use.

The other method is disclosed in the state of the art United States Patent Application No. US2017258262. This document discloses a sugar dosing mechanism for a coffee maker. According to this document, the user puts the ingredients in an amount sufficient for a single use into the coffee and sugar receptacles. The coffee and sugar in said receptacles are transferred to the brewing pot before the brewing process by means of gravity. In this method, residue remains in the coffee and sugar receptacles, which causes customer dissatisfaction.

In the state of the art Turkish Patent Application No. TR201301618, a sugar dosing mechanism is disclosed, comprising a sugar receptacle and a motor.

In the state of the art European Patent Application No. EP1254621, a sugar dosing mechanism is disclosed, comprising a spiral sugar receptacle and a motor.

In the state of the United Sates Patent No. US5330078, a coffee maker is disclosed, comprising a spiral mechanism for dosing sugar and similar materials.

Document CN102578916A relates to a mixing device applicable to brewing Turkish coffee. The mixing device can be used for automatically mixing coffee, sugar, and water, and pouring the mixture into a water boiling cup to brew the Turkish coffee.

The aim of the present invention is the realization of a coffee maker which comprises a detachable transfer channel and which is used especially for preparing Turkish coffee.

The coffee maker realized in order to attain the aim of the present invention, explicated in the first claim and the respective claims thereof, comprises at least one brewing pot wherein water, coffee and similar materials are put and which is placed into the brewing chamber; at least one heater which is disposed on the base of the brewing chamber and which heats the brewing pot; a control unit which enables the heater to be turned on and off; at least one sugar receptacle which receives sugar; at least one coffee receptacle which receives coffee; at least one first orifice which opens into the coffee and/or sugar receptacle and which enables the transfer of coffee and sugar; a second orifice through which water is taken; at least one transfer channel which extends from the coffee and sugar receptacles towards the brewing pot and wherein coffee, sugar and water are mixed and transferred into the brewing pot; a housing which receives the transfer channel and which is provided on the brewing chamber; and a quadrilateral lid which enables the attachment/detachment of the transfer channel, which moves together with the transfer channel and which covers the housing when closed. Thus, the transfer channel can be completed detached from the coffee maker by the user to clean the coffee and sugar accumulated therein and can be easily attached in place after the cleaning process is completed.

In an embodiment of the present invention, the lid, when closed, is flush with the exterior of the coffee maker.

The coffee maker comprises two side walls, an upper wall and a lower wall which extend into the housing and which surround the lid, and at least one opening which is provided on the lower wall and which enables the coffee, sugar and water to be mixed together to transferred to the brewing pot.

In an embodiment of the present invention, the coffee maker comprises at least one handle which is provided on the lid and which enables the user to easily grasp the lid and remove the same from the housing and put the same back in place.

According to the invention, the coffee maker comprises a pop-in pop-out mechanism which enables the lid the move back and forth and which enables the user to pull the lid out of the housing with the transfer channel thereon, and put the same back into the housing.

In another embodiment of the present invention, the coffee maker comprises at least one rail which is provided oppositely on each of the side walls of the housing and at least two guides which are provided on the side walls of the lid and which are fitted in said rails. The lid is aligned by means of the rails and the guides fitted into the rails so as to move back and forth in the housing together with the transfer channel. When the lid is closed, the guides are fully seated in the rails and bear against the stoppers at the ends of the rails.

In another embodiment of the present invention, the coffee maker comprises at least one protrusion which is provided on the rails so as to extend into the housing, and at least one recess which fully receives the protrusion when the lid is fully closed and which enables the lid to be locked into the housing. The protrusions or recesses have a flexible structure and stretch while the lid is being attached to and detached from the housing, thus enabling the lid to be easily attached or detached. The protrusion and the recess serve as a locking mechanism.

According to the present invention, in the coffee maker, the coffee and sugar receptacles are not positioned at the same vertical level with the brewing pot. Before the brewing process, coffee and sugar dosed into the brewing pot are not transferred directly, but instead are first transferred to the transfer channel. Coffee and sugar enter the transfer channel by means of gravity through the first orifice. After being transferred through the first orifice into the transfer channel, coffee and sugar are mixed with preferably pressurized water delivered through the second orifice such that the mixture of coffee, sugar and water is transferred to the brewing pot through the opening, which forms the outlet of the transfer channel together with the lid and which opens into the brewing pot.

In the coffee maker, the part into which the first and second orifices open also forms the inlet section of the transfer channel. In this embodiment of the present invention, the second orifice is arranged on the wall behind the inlet section. Thus, it is ensured that all of the coffee and sugar get into contact with water while preventing the formation of residues in the transfer channel.

In an embodiment of the present invention, the coffee maker comprises a first sealing member which provides leakproofing as the first orifice on the inlet section is fully seated thereon when the lid is closed. In this embodiment of the present invention, when the lid is fitted to the housing together with the transfer channel, the first orifice fully presses on the sealing member and is leakproofingly connected to the coffee and sugar receptacles in the coffee maker body. Coffee and sugar are transferred from the coffee and sugar receptacles to the transfer channel with the effect of gravity. There is no mechanical connection between the coffee and sugar receptacles from which coffee and sugar are transferred and the transfer channel, except for the first sealing member. In the preferred embodiment of the present invention, a gasket preferably manufactured from soft material is provided at the first orifice as the first sealing member. When the lid and the transfer channel are fitted to the housing, the first orifice presses on the gasket, which is the first sealing member, preventing the coffee and sugar from leaking out of the transfer channel into the coffee maker.

In an embodiment of the present invention, the coffee maker comprises a second sealing member which provides leakproofing as the second orifice on the rear wall of the inlet section is fully seated thereon when the lid is closed. In this embodiment of the present invention, when the lid is fitted to the housing together with the transfer channel, the second orifice fully presses on the second sealing member and is leakproofingly connected to the pump and the water line in the coffee maker body. In this embodiment of the present invention, the coffee and sugar transferred to the transfer channel are delivered to the brewing pot with pressurized water. The pressurized water enabling said delivery is provided by the second orifice arranged on the rear wall of the transfer channel. There is no mechanical connection between the second orifice and the transfer channel, except for the second sealing member. A gasket preferably manufactured from soft material is provided around the second orifice as the second sealing member. When the transfer channel is fitted to the housing together with the lid, the second orifice presses on the gasket, which is the second sealing member, thus providing leakproofing.

By means of the present invention, the user is enabled to completely detach the transfer channel from the coffee maker to clean the coffee and sugar accumulated in the transfer channel and to put back the same in place after the cleaning is easily performed. Thus, any hygiene problems are eliminated. Moreover, the coffee and sugar residues which accumulate and solidify in the transfer channel when the coffee maker is not used for a long time are prevented from damaging the functions of the coffee maker. Furthermore, coffee and sugar are prevented from leaking out of the transfer channel into the coffee maker.

A coffee maker realized in order to attain the aim of the present invention is illustrated in the attached figures, where:
Figure 1 - is the perspective view of a coffee maker together with the housing.
Figure 2 - is the perspective view of the coffee maker together with the lid.
Figure 3 - is the sideways cross-sectional view of the coffee maker.

The elements illustrated in the figures are numbered as follows:
1. Coffee maker
2. Brewing pot
3. Sugar receptacle
4. Coffee receptacle
5. Transfer channel
6. First orifice
7. Second orifice
8. Housing
9. Lid
10. Side wall
11. Lower wall
12. Opening
13. Rail
14. Guide
15. Recess
16. Protrusion
17. First sealing member
18. Second sealing member

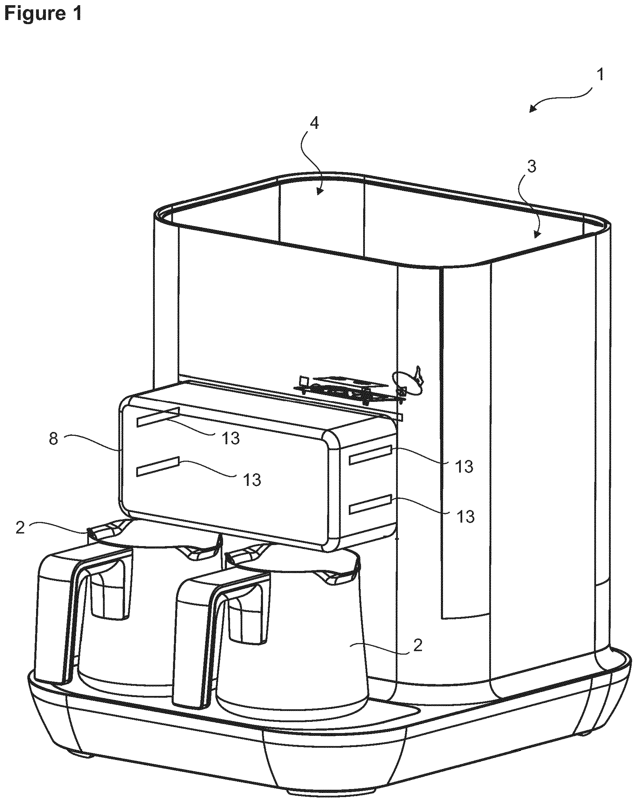

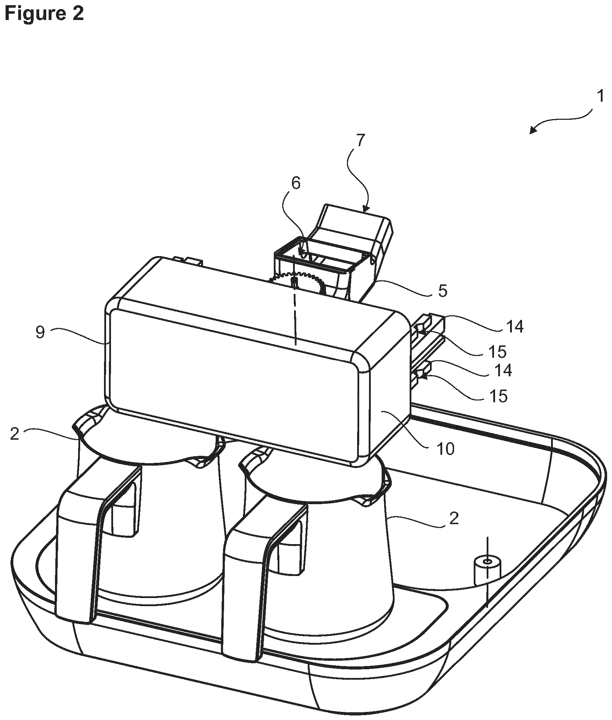

The coffee maker (1) comprises at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; at least one sugar receptacle (3) which receives sugar; at least one coffee receptacle (4) which receives coffee; at least one first orifice (6) which opens into the sugar and/or coffee receptacle (3 and/or 4) and which enables the transfer of coffee and sugar; a second orifice (7) through which water is taken; at least one transfer channel (5) which extends from the sugar and coffee receptacles (3 and 4) towards the brewing pot (2) and wherein coffee, sugar and water are mixed and transferred into the brewing pot (2); a housing (8) which receives the transfer channel (5) and which is provided on the brewing chamber; and a preferably quadrilateral lid (9) which enables the attachment/detachment of the transfer channel (5), which moves together with the transfer channel (5) and which covers the housing (8) when closed. Thus, the transfer channel (5) can be completed detached from the coffee maker (1) by the user to clean the coffee and sugar accumulated therein and can be easily attached in place after the cleaning process is completed (Figure 1 and Figure 2).

In an embodiment of the present invention, the lid (9), when closed, is flush with the exterior of the coffee maker (1).

The coffee maker (1) comprises two side walls (10), an upper wall and a lower wall (11) which extend into the housing (8) and which surround the lid (9), and at least one opening (12) which is provided on the lower wall (11) and which enables the coffee, sugar and water to be mixed together to transferred to the brewing pot (2).

In an embodiment of the present invention, the coffee maker (1) comprises at least one handle which is provided on the lid (9) and which enables the user to easily grasp the lid (9) and remove the same from the housing (8) and put the same back in place.

According to the invention, the coffee maker (1) comprises a pop-in pop-out mechanism which enables the lid (9) the move back and forth and which enables the user to pull the lid (9) out of the housing (8) with the transfer channel (5) thereon, and put the same back into the housing (8).

In another embodiment of the present invention, the coffee maker (1) comprises at least one rail (13) which is provided oppositely on each of the side walls (10) of the housing (8) and at least two guides (14) which are provided on the side walls (10) of the lid (9) and which are fitted in said rails (13). The lid (9) is aligned by means of the rails (13) and the guides (14) fitted into the rails (13) so as to move back and forth in the housing (8) together with the transfer channel (5). When the lid (9) is closed, the guides (14) are fully seated in the rails (13) and bear against the stoppers at the ends of the rails (13).

In another embodiment of the present invention, the coffee maker (1) comprises at least one protrusion (16) which is provided on the rails (13) so as to extend into the housing (8), and at least one recess (15) which fully receives the protrusion (16) when the lid (9) is fully closed and which enables the lid (9) to be locked into the housing (8). The protrusions (16) or recesses (15) have a flexible structure and stretch while the lid (9) is being attached to and detached from the housing (8), thus enabling the lid (9) to be easily attached or detached. The protrusion (16) and the recess (15) serve as a locking mechanism.

According to the present invention, in the coffee maker (1), the sugar and coffee receptacles (3 and 4) are not positioned at the same vertical level with the brewing pot (2). Before the brewing process, coffee and sugar dosed into the brewing pot (29 are not transferred directly, but instead are first transferred to the transfer channel (5). Coffee and sugar enter the transfer channel (5) by means of gravity through the first orifice (6). After being transferred through the first orifice (6) into the transfer channel (5), coffee and sugar are mixed with preferably pressurized water delivered through the second orifice (7) such that the mixture of coffee, sugar and water is transferred to the brewing pot (2) through the opening (12), which forms the outlet of the transfer channel (5) together with the lid (9) and which opens into the brewing pot (2).

In the coffee maker (1), the part into which the first and second orifices (6 and 7) open also forms the inlet section of the transfer channel (5). In this embodiment of the present invention, the second orifice (7) is arranged on the wall behind the inlet section. Thus, it is ensured that all of the coffee and sugar get into contact with water while preventing the formation of residues in the transfer channel (5).

In an embodiment of the present invention, the coffee maker (1) comprises a first sealing member (17) which provides leakproofing as the first orifice (6) on the inlet section is fully seated thereon when the lid (9) is closed. In this embodiment of the present invention, when the lid (9) is fitted to the housing (8) together with the transfer channel (5), the first orifice (6) fully presses on the sealing member (17) and is leakproofingly connected to the sugar and coffee receptacles (3 and 4) in the coffee maker (1). Sugar and coffee are transferred from the sugar and coffee receptacles (3 and 4) to the transfer channel (5) with the effect of gravity. There is no mechanical connection between the sugar and coffee receptacles (3 and 4) from which sugar and coffee are transferred and the transfer channel (5), except for the first sealing member (17). In the preferred embodiment of the present invention, a gasket preferably manufactured from soft material is provided at the first orifice (6) as the first sealing member (17). When the lid (9) and the transfer channel (5) are fitted to the housing (8), the first orifice (6) presses on the gasket, which is the first sealing member (17), preventing the coffee and sugar from leaking out of the transfer channel (5) into the coffee maker (1).

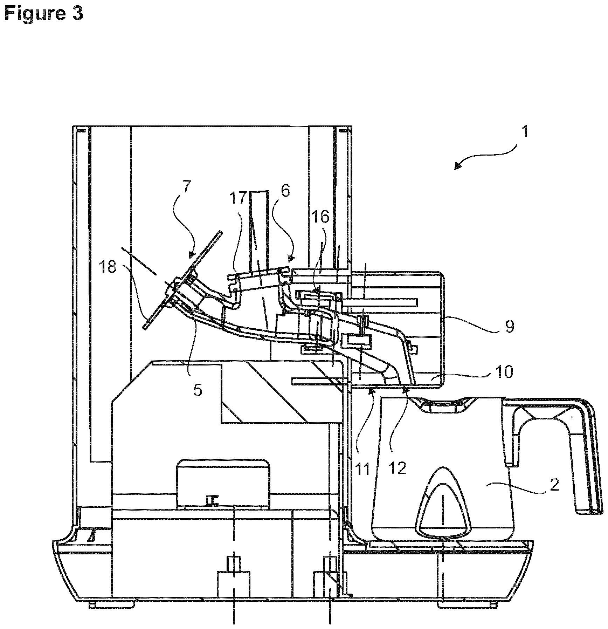

In an embodiment of the present invention, the coffee maker (1) comprises a second sealing member (18) which provides leakproofing as the second orifice (7) on the rear wall of the inlet section is fully seated thereon when the lid (9) is closed. In this embodiment of the present invention, when the lid (9) is fitted to the housing (8) together with the transfer channel (5), the second orifice (7) fully presses on the second sealing member (18) and is leakproofingly connected to the pump and the water line in the coffee maker (1). In this embodiment of the present invention, the coffee and sugar transferred to the transfer channel (5) are delivered to the brewing pot (2) with pressurized water. The pressurized water enabling said delivery is provided by the second orifice (7) arranged on the rear wall of the transfer channel (5). There is no mechanical connection between the second orifice (7) and the transfer channel (5), except for the second sealing member (18). A gasket preferably manufactured from soft material is provided around the second orifice (7) as the second sealing member (18). When the transfer channel (5) is fitted to the housing (8) together with the lid (9), the second orifice (7) presses on the gasket, which is the second sealing member (18), thus providing leakproofing (Figure 3).

By means of the present invention, the user is enabled to completely detach the transfer channel (5) from the coffee maker (1) to clean the coffee and sugar accumulated in the transfer channel (5) and to put back the same in place after the cleaning is easily performed. Thus, any hygiene problems are eliminated. Moreover, the coffee and sugar residues which accumulate and solidify in the transfer channel (5) when the coffee maker (1) is not used for a long time are prevented from damaging the functions of the coffee maker (1). Furthermore, coffee and sugar are prevented from leaking out of the transfer channel (5) into the coffee maker (1).

## Claims

1. A coffee maker (1) **comprising** at least one brewing pot (2) wherein water, coffee and similar materials are put and which is placed into the brewing chamber; at least one heater which is disposed on the base of the brewing chamber and which heats the brewing pot (2); a control unit which enables the heater to be turned on and off; at least one sugar receptacle (3) which receives sugar; at least one coffee receptacle (4) which receives coffee; at least one transfer channel (5) which extends from the sugar and coffee receptacles (3 and 4) towards the brewing pot (2); wherein the coffee and sugar receptacles (3 and 4) are not positioned at the same vertical level with the brewing pot (2) and wherein the transfer channel (5) is configured to receive coffee and sugar by means of gravity through a first orifice (6) which opens into the coffee and sugar receptacle (3, 4) such that the coffee and sugar transferred to the transfer channel (5) is mixed with water delivered through a second orifice (7) such that the mixture of coffee, sugar, and water is transferred to the brewing pot (2) through an opening (12), which forms an outlet of the transfer channel (5) together with the lid (9) and which opens into the brewing pot (2) **characterized by** a housing (8) which receives the transfer channel (5) and which is provided on the brewing chamber and a lid (9) which enables the attachment/detachment of the transfer channel (5), which covers the housing (8) when closed wherein a pop-in pop-out mechanism enables the lid (9) to move back and forth and enables the user to pull the lid (9) out of the housing (8) with the transfer channel (5) thereon, and put the same back into the housing (8).

2. A coffee maker (1) as in Claim 1, **characterized by** the lid (9) being quadrilateral

3. A coffee maker (1) as in Claim 1, **characterized by** the lid (9) which, when closed, is flush with the exterior of the coffee maker (1).

4. A coffee maker (1) as in Claim 1, **characterized by** two side walls (10), an upper wall and a lower wall (11) which extend into the housing (8) and which surround the lid (9), and at least one opening (12) which is provided on the lower wall (11) and which enables the coffee, sugar and water to be mixed together and transferred to the brewing pot (2).

5. A coffee maker (1) as in Claim 1, **characterized by** at least one handle which is provided on the lid (9) and which enables the user to easily grasp the lid (9) and remove the same from the housing (8) and put the same back in place.

6. A coffee maker (1) as in Claim 4, **characterized by** at least one rail (13) which is provided oppositely on each of the side walls (10) of the housing (8) and at least two guides (14) which are provided on the side walls (10) of the lid (9) and which are fitted in said rails (13).

7. A coffee maker (1) as in Claim 6, **characterized by** at least one protrusion (16) which is provided on the rails (13) so as to extend into the housing (8), and at least one recess (15) which fully receives the protrusion (16) when the lid (9) is fully closed and which enables the lid (9) to be locked into the housing (8).

8. A coffee maker (1) as in Claim 1, **characterized by** a first sealing member (17) which provides leakproofing as the first orifice (6) on the inlet section is fully seated thereon when the lid (9) is closed.

9. A coffee maker (1) as in Claim 1, **characterized by** a second sealing member (18) which provides leakproofing as the second orifice (7) on the rear wall of the inlet section is fully seated thereon when the lid (9) is closed.

## Patentansprüche

1. Eine Kaffeemaschine (1) **umfasst** mindestens eine Brühkanne (2), in die Wasser, Kaffee und ähnliche Zutaten gefüllt werden und die in die Brühkammer gestellt wird; mindestens eine Heizvorrichtung, die am Boden der Brühkammer angeordnet ist und die die Brühkanne (2) beheizt; eine Steuereinheit, die es ermöglicht, die Heizvorrichtung ein- und auszuschalten; mindestens einen Zuckerbehälter (3), der Zucker aufnimmt; mindestens einen Kaffeebehälter (4), der Kaffee aufnimmt; mindestens einen Übertragungskanal (5), der sich von den Zucker- und Kaffeebehältern (3 und 4) zur Brühkanne (2) erstreckt; wobei die Kaffee- und Zuckerbehälter (3 und 4) nicht auf derselben vertikalen Ebene mit der Brühkanne (2) positioniert sind und wobei der Übertragungskanal (5) so konfiguriert ist, dass er Kaffee und Zucker mittels der Schwerkraft durch eine erste Öffnung (6) aufnimmt, die sich in den Kaffee- und Zuckerbehälter (3, 4) mündet, so dass der in den Übertragungskanal (5) übertragene Kaffee und Zucker mit Wasser gemischt wird, das durch eine zweite Öffnung (7) zugeführt wird, so dass die Mischung aus Kaffee, Zucker und Wasser durch eine Öffnung (12), die zusammen mit dem Deckel (9) einen Auslass des Übertragungskanals (5) bildet und in die Brühkanne (2) mündet, in die Brühkanne (2) übertragen wird **gekennzeichnet ist sie dadurch,** dass ein Gehäuse (8), das den Übertragungskanal (5) aufnimmt und das an der Brühkammer vorgesehen ist, und einen Deckel (9), der das Anbringen/Abnehmen des Übertragungskanals (5) ermöglicht, der das Gehäuse (8) abdeckt, wenn es geschlossen ist, wobei ein Pop-in-Pop-out-Mechanismus es dem Deckel (9) ermöglicht, sich hin- und herzubewegen, und es dem Benutzer ermöglicht, den Deckel (9) aus dem Gehäuse (8) mit dem darauf befindlichen Übertragungskanal (5) herauszuziehen und denselben wieder in das Gehäuse (8) einzusetzen.

2. Eine Kaffeemaschine (1) wie in Anspruch 1 aufgeführt, **ist dadurch gekennzeichnet, dass** der Deckel (9) quadratisch ist.

3. Eine Kaffeemaschine (1) wie in Anspruch 1 aufgeführt, **ist dadurch gekennzeichnet, dass** der Deckel (9), wenn er geschlossen ist, bündig mit der Außenseite der Kaffeemaschine (1) ist.

4. Eine Kaffeemaschine (1) wie in Anspruch 1 aufgeführt, **ist dadurch gekennzeichnet, dass** zwei Seitenwände (10), eine obere Wand und eine untere Wand (11), die sich in das Gehäuse (8) erstrecken und die den Deckel (9) umgeben, und mindestens eine Öffnung (12), die an der unteren Wand (11) vorgesehen ist und die es ermöglicht, den Kaffee, den Zucker und das Wasser miteinander zu vermischen und in die Brühkanne (2) zu übertragen.

5. Eine Kaffeemaschine (1) wie in Anspruch 1 aufgeführt, **ist dadurch gekennzeichnet, dass** mindestens einen Griff, der an dem Deckel (9) vorgesehen ist und der es dem Benutzer ermöglicht, den Deckel (9) leicht zu ergreifen und denselben von dem Gehäuse (8) zu entfernen und denselben wieder anzubringen.

6. Eine Kaffeemaschine (1) wie in Anspruch 4 aufgeführt, **ist dadurch gekennzeichnet, dass** mindestens eine Schiene (13), die gegenüberliegend an jeder der Seitenwände (10) des Gehäuses (8) vorgesehen ist, und mindestens zwei Führungen (14), die an den Seitenwänden (10) des Deckels (9) vorgesehen sind und die in die Schienen (13) eingepasst sind.

7. Eine Kaffeemaschine (1) wie in Anspruch 6 aufgeführt, **ist dadurch gekennzeichnet, dass** mindestens ein Vorsprung (16), der an den Schienen (13) vorgesehen ist, um sich in das Gehäuse (8) zu erstrecken, und mindestens eine Aussparung (15), die den Vorsprung (16) vollständig aufnimmt, wenn der Deckel (9) vollständig geschlossen ist, und die es ermöglicht, den Deckel (9) im Gehäuse (8) zu verriegeln.

8. Eine Kaffeemaschine (1) wie in Anspruch 1 aufgeführt, ist **dadurch gekennzeichnet, dass** ein erstes Dichtungselement (17), das für die Dichtigkeit der ersten Öffnung (6) am Einlassabschnitt sorgt, vollständig darauf sitzt, wenn der Deckel (9) geschlossen ist.

9. Eine Kaffeemaschine (1) wie in Anspruch 1 aufgeführt, ist **dadurch gekennzeichnet, dass** ein zweites Dichtungselement (18), das für die Dichtigkeit der zweiten Öffnung (7) an der Rückwand des Einlassabschnitts sorgt, vollständig darauf sitzt, wenn der Deckel (9) geschlossen ist.

## Revendications

1. Une machine à café (1) **comprenant** au moins un récipient d'infusion (2) dans lequel de l'eau, du café et des matériaux similaires sont ajoutés et qui est placé dans la chambre d'infusion ; au moins un élément chauffant qui est disposé à la base de la chambre d'infusion et qui chauffe le récipient d'infusion (2) ; une unité de contrôle qui permet d'activer et de désactiver l'élément chauffant ; au moins un réceptacle à sucre (3) qui est destiné à recevoir du sucre ; au moins un réceptacle à café (4) qui est destiné à recevoir du café ; au moins un canal de transfert (5) qui s'étend des réceptacles à sucre et à café (3 et 4) vers le récipient d'infusion (2) ; dans laquelle les réceptacles à café et à sucre (3 et 4) ne sont pas positionnés au même niveau vertical que le récipient d'infusion (2), et le canal de transfert (5) est configuré pour recevoir le café et le sucre par gravité à travers un premier orifice (6) qui s'ouvre dans les réceptacles à café et à sucre (3, 4), de sorte que le café et le sucre transférés dans le canal de transfert (5) sont mélangés avec l'eau introduite à travers un deuxième orifice (7), de manière à ce que le mélange de café, de sucre et d'eau est transféré dans le récipient d'infusion (2) à travers une ouverture (12), qui forme la sortie du canal de transfert (5) conjointement avec le couvercle (9), et qui s'ouvre dans le récipient d'infusion (2), **caractérisée par** un boîtier (8) qui reçoit le canal de transfert (5) et qui est prévu sur la chambre d'infusion, et un couvercle (9) qui permet l'attachement et le détachement du canal de transfert (5), qui recouvre le boîtier (8) lorsqu'il est fermé, dans laquelle un mécanisme à enclenchement permet au couvercle (9) de se déplacer d'avant en arrière et permet à l'utilisateur de retirer le couvercle (9) du boîtier (8) avec le canal de transfert (5) dessus, et de le replacer dans le boîtier (8).

2. Une machine à café (1) selon la Revendication 1, **caractérisée par** le couvercle (9) qui est quadrilatéral.

3. Une machine à café (1) selon la Revendication 1, **caractérisée par** le couvercle (9) qui , lorsqu'il est fermé, affleure l'extérieur de la machine à café (1).

4. Une machine à café (1) selon la Revendication 1, **caractérisée par** deux parois latérales (10), une paroi supérieure et une paroi inférieure (11) qui s'étendent dans le boîtier (8) et qui entourent le couvercle (9), et au moins une ouverture (12) qui est prévue sur la paroi inférieure (11) et qui permet de mélanger le café, le sucre et l'eau et de les transférer vers le récipient d'infusion (2).

5. Une machine à café (1) selon la Revendication 1, **caractérisée par** au moins une poignée qui est prévue sur le couvercle (9) et qui permet à l'utilisateur de saisir facilement le couvercle (9) et de le retirer du boîtier (8) et de le remettre en place.

6. Une machine à café (1) selon la Revendication 4, **caractérisée par** au moins un rail (13) qui est prévu en opposition sur chacune des parois latérales (10) du boîtier (8) et au moins deux guides (14) qui sont disposés sur les parois latérales (10) du couvercle (9) et qui viennent s'insérer dans lesdits rails (13).

7. Une machine à café (1) selon la Revendication 6, **caractérisée par** au moins une saillie (16) qui est prévue sur les rails (13) de manière à s'étendre dans le boîtier (8), et au moins un évidement (15) qui reçoit entièrement la saillie (16) lorsque le couvercle (9) est complètement fermé et qui permet de verrouiller le couvercle (9) dans le boîtier (8).

8. Une machine à café (1) selon la Revendication 1, **caractérisée par** un premier élément d'étanchéité (17) qui assure l'étanchéité lorsque le premier orifice (6) de la section d'entrée est complètement positionné dessus lorsque le couvercle (9) est fermé.

9. Une machine à café (1) selon la Revendication 1, **caractérisée par** un second élément d'étanchéité (18) qui assure l'étanchéité lorsque le deuxième orifice (7) sur la paroi arrière de la section d'entrée est complètement positionné dessus lorsque le couvercle (9) est fermé.
